# EUROPEAN PATENT APPLICATION

(11) **EP 4 484 880 A1**
(43) Date of publication of application: **01.01.2025**
(21) Application number: 24185512.1
(22) Date of filing: 28.06.2024
(51) Int. Cl.: F28F 9/16, F28D 7/16, F28F 19/04, F28F 11/00

(54) **A METHOD FOR PROTECTING TUBES OF A HEAT EXCHANGER**

(30) Priority: 30.06.2023 US 202363511211 P
(71) Applicant: Carrier Corporation, Palm Beach Gardens, FL 33418 (US)
(72) Inventor: AVILA, Luis, Syracuse, NY 13221 (US); KEINATH, Christopher, Syracuse, NY 13221 (US); BRYANT, Thomas, Syracuse, NY 13221 (US); ALLAHAR, Kerry, Syracuse, NY 13221 (US); ROBINSON, Ian, Warners, NY 13164 (US); DEKOLD, Mary, Syracuse, NY 13221 (US); NGUYEN, Johnson, Syracuse, NY 13221 (US)
(74) Representative: Dehns

(57) **Abstract**

The disclosure provides a method for protecting a tube of a heat exchanger. The method includes inserting at least one portion of a non-ferrous tube into a hole of a tube sheet of the heat exchanger. The at least one portion of the non-ferrous tube is then rolled to radially expand the at least one portion. The at least one portion expands and forms a seal with the hole. A sleeve is then affixed onto an inner surface corresponding to the at least one portion of the non-ferrous tube.

## Description

This application claims the benefit of U.S. Provisional Patent Application No. 63/511,211 filed on June 30, 2023, which is incorporated by reference herein in its entirety.

The invention generally relates to heat exchangers and more particularly, relates to a method for protecting tubes of a heat exchanger.

Heat exchangers have been known for their use in various Heating, Ventilation, and Air Conditioning (HVAC) applications. HVAC systems are generally used to improve an environment's air quality to provide favorable temperatures. Heat exchangers work by transferring heat from one medium to another. There are various types of heat exchangers, including shell and tube heat exchangers, double-pipe heat exchangers, plate heat exchangers, condensers, evaporators, and boilers. Typically, a shell-and-tube heat exchanger includes two working fluids, one of which is adapted to be driven through the tubes, while the other working fluid is driven inside a shell. The working fluid within the tubes exchange heat with the working fluid contained within the shell.

The shell-and-tube heat exchangers include a tube sheet that contains holes to receive the tubes. The tubes after being inserted into the holes of the tube sheet are expanded, such that the tubes can be fixed into the holes. Each tube is radially expanded at a joint of the tube and the hole of the tube sheet by using a rolling tool, such that the tube forms a seal with the hole due to expansion. Such an expansion plastically deforms the tube, thereby damaging an interior portion of the tube, and causing thinning of the tube. This also substantially reduces the overall durability and strength of the tube.

Therefore, in view of the above-mentioned problems, there is a need to provide at least a method that can be implemented to protect the tubes which are damaged while assembling with the tube sheet of the shell-and-tube heat exchanger.

This summary is provided to introduce a selection of concepts, in a simplified format, that are further described in the detailed description of the disclosure. This summary is neither intended to identify key or essential inventive concepts of the disclosure and nor is it intended for determining the scope of the disclosure.

According to a first aspect of the invention there is provided herein a method for protecting a tube of a heat exchanger as recited in claim 1. The method includes inserting at least one portion of a non-ferrous tube into a hole of a tube sheet of the heat exchanger. The at least one portion of the non-ferrous tube is then rolled to radially expand the at least one portion of the non-ferrous tube. The at least one portion expands and forms a seal with the hole. A sleeve is then affixed onto an inner surface corresponding to the at least one portion of the non-ferrous tube.

Optionally, the sleeve is mechanically affixed onto the inner surface of the non-ferrous tube.

Optionally, the sleeve is chemically affixed onto the inner surface of the non-ferrous tube.

Optionally, chemically affixing the sleeve includes applying an adhesive onto the inner surface of the non-ferrous tube. The sleeve is then inserted into the non-ferrous tube to coaxially align the sleeve with the inner surface of the non-ferrous tube. The sleeve is then affixed onto the inner surface of the non-ferrous tube using the adhesive.

Optionally, affixing the sleeve on the inner surface having a coating, includes coaxially aligning the sleeve with the coating of the non-ferrous tube. The sleeve is then affixed onto the coating or a damaged portion of the coating. The damaged portion is defined as a portion of the coating which is rolled to radially expand the at least one portion of the non-ferrous tube.

Optionally, the adhesive is a pressure sensitive adhesive.

Optionally, the adhesive is activated by applying pressure on at least one portion of the sleeve with a rolling tool.

Optionally, the method includes aligning the sleeve coaxially with a joint of the non-ferrous tube. The joint is defined between a rolled portion of the non-ferrous tube and an unrolled portion of the non-ferrous tube.

Optionally, the non-ferrous tube is made up of Aluminum.

Optionally, the sleeve is formed of a watertight material.

Optionally, the watertight material is a flexible elastomer.

Optionally, the heat exchanger includes a plurality of tubes for exchanging heat. The plurality of tubes is protected according to the above-mentioned method.

Optionally, the plurality of tubes is protected according to the abovementioned method, and the sleeve includes a thickness of 0.002 mm to 6 mm.

According to a second aspect of the invention there is provided a heat exchanger comprising a plurality of tubes for exchanging heat, wherein the plurality of tubes is protected by the method according to the first aspect of the invention. The heat exchanger of the second aspect of the invention may therefore comprise any of the features of the heat exchanger recited herein with reference to the method of the first aspect of the invention.

Optionally, the plurality of tubes is protected according to the abovementioned method, and the sleeve includes a thickness of 0.002 mm to 6 mm.

To further clarify the advantages and features of the methods, systems, and apparatuses, a more particular description of the methods, systems, and apparatuses will be rendered by reference to specific embodiments thereof, which are illustrated in the appended drawings. It is appreciated that these drawings depict only typical embodiments of the disclosure and are therefore not to be considered limiting of its scope. The disclosure will be described and explained with additional specificity and detail with the accompanying drawings.

These and other features, aspects, and advantages of the disclosure will become better understood when the following detailed description is read with reference to the accompanying drawings in which like characters represent like parts throughout the drawings, wherein:
Figure 1 illustrates a flowchart depicting a method for protecting a non-ferrous tube of a heat exchanger;
Figures 2A and 2B depict rolling of the non-ferrous tube in a hole of a tube sheet for the heat exchanger;
Figure 3A illustrates a schematic view depicting one of the non-ferrous tubes before performing the rolling operation in the non-ferrous tube;
Figure 3B illustrates a schematic view depicting at least one portion which is damaged on an inner surface of the non-ferrous tube after rolling the non-ferrous tube; and
Figures 4A - 4D are line diagrams showing fixing of the non-ferrous tube into the hole of the tube sheet.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the disclosure. Furthermore, in terms of the construction of the device, one or more components of the device may have been represented in the drawings by conventional symbols, and the drawings may show only those specific details that are pertinent to understanding the embodiments of the disclosure so as not to obscure the drawings with details that will be readily apparent to those of ordinary skill in the art having the benefit of the description herein.

For the purpose of promoting an understanding of the principles of the disclosure, reference will now be made to the various embodiments and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect", "another aspect" or similar language means that a particular feature, structure, or characteristic described in connection with the embodiment is included in at least one embodiment of the disclosure. Thus, appearances of the phrase "in an embodiment", "in another embodiment", "some embodiments", "one or more embodiments" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Embodiments of the disclosure will be described below in detail with reference to the accompanying drawings.

The disclosure relates to a method for protecting a tube of a heat exchanger. In one or more embodiments, the heat exchanger may be embodied as a shell and tube heat exchanger. The heat exchanger may include two working fluids that are adapted to exchange heat. One of the working fluids may be adapted to flow into tubes provided in the heat exchanger, while the other working fluid flows inside a shell of the heat exchanger. In one example the working fluids may include a liquid (e.g., water), gases, or some combination thereof. The heat exchanger includes a tube sheet having holes adapted to receive the tubes. The tubes are rolled to be fixed into the holes of the tube sheet with a rolling tool. During installation, rolling the tubes with the rolling tool damages an inner surface of the tubes, which substantially reduces the overall service life of the tubes by causing thinning of the tubes. The overall durability and strength of the tube are therefore reduced. The reduction in the overall service life of the tubes results in a substantial reduction in the overall service life of the heat exchanger.

Further, conventionally, the heat exchanger is deployed with the tubes formed of materials, such as copper (Cu), Copper-Nickel alloy (Cu-Ni,), and Titanium. Owing to the use of such materials, the overall manufacturing cost of the tubes is substantially high thereby resulting in a higher manufacturing cost of the heat exchanger. Alternatively, the heat exchanger is deployed with the tubes formed of materials, such as aluminum, which is substantially cheaper as compared to the conventional materials used for manufacturing the tubes. However, such aluminum tubes are susceptible to corrosion and fouling. To reduce the rate of corrosion, a surface treatment is usually applied to protect the base of the tubes (i.e., aluminum or aluminum alloy material) from corrosive interactions (e.g., with water and/or impurities therein, for example, chlorine, fluorine, and other dissociated ionic species).

However, the surface treatments (e.g., coatings) can be compromised by mechanical damage when the surface treatment processes are carried out prior to other manufacturing operations (e.g., fabrication and assembly steps). For instance, when the surface treatment is carried out on disassembled components, for example, the tubes of the heat exchanger, then an assembling process implemented for attaching such tubes may increase the risk of damaging surfaces, such as an internal surface of the tubes. The damage to the internal surface of the tubes may lead to premature failure of the base material due to corrosive activity. For example, during the manufacturing of heat exchanger tubes, the tubes are masked, coated prior to tube expanding, and/or brazed into the heat exchanger. The manufacturing operations can leave the tube portions (e.g., interconnections, such as braze joints and seams) unprotected, as the tube portions would not have received the same surface treatment that the surrounding materials received.

Therefore, to solve the aforementioned problems, the disclosure provides a method for protecting the tubes of the heat exchanger, such that the rolled portion of the tubes can retain similar strength and durability as other portions of the tube. In particular, the method may be implemented for the non-ferrous tube. In one embodiment, the non-ferrous tube may be formed of aluminum. The aluminum tubes may in an embodiment be coated on the inner surface to extend useful life thereof. The coating may get damaged due to the rolling process to assemble the tubes in the tube sheet of the heat exchanger. The method helps in maintaining the integrity of the base material (aluminum) and protecting the tube from corrosion, even after damage to the coating.

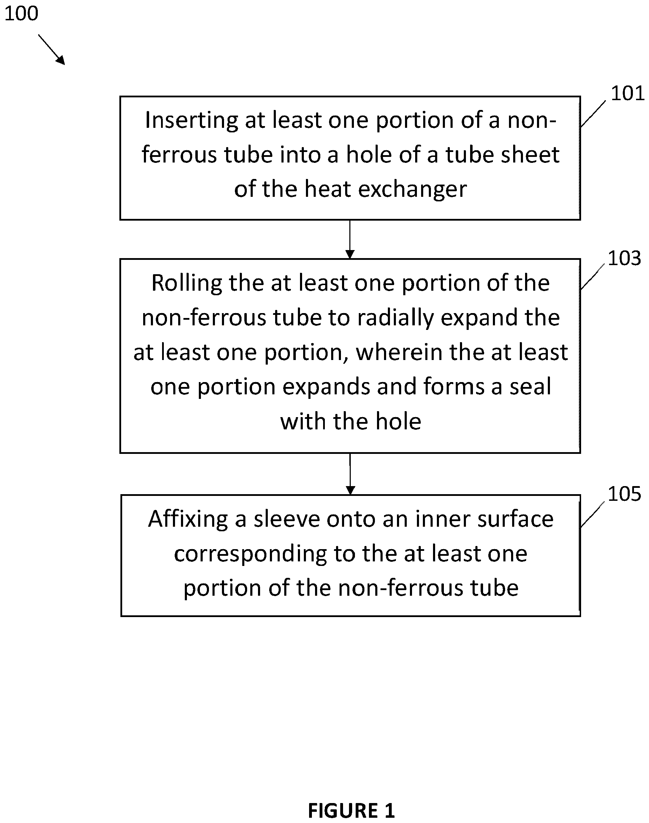

The disclosure relates to a method 100 for protecting a tube of a heat exchanger (not shown) with the non-ferrous tube 300, as depicted in Figure 1. In one or more embodiments, the heat exchanger may be embodied as a shell and tube heat exchanger, without departing from the scope of the disclosure. Hereinafter, the shell and tube heat exchanger may interchangeably be referred to as the heat exchanger. Figure 1 illustrates a flowchart depicting the method 100 for protecting the tube of the shell and tube exchanger. In one embodiment, each of the non-ferrous tubes 300 may be formed of aluminum, without departing from the scope of the disclosure. The manufacturing of the non-ferrous tubes 300 with aluminum makes them light in weight and less expensive as compared to the materials used for manufacturing tubes in conventional heat exchangers. In other embodiments, the non-ferrous tubes 300 may be formed of any other material based on constructional and operational requirements, without departing from the scope of the disclosure.

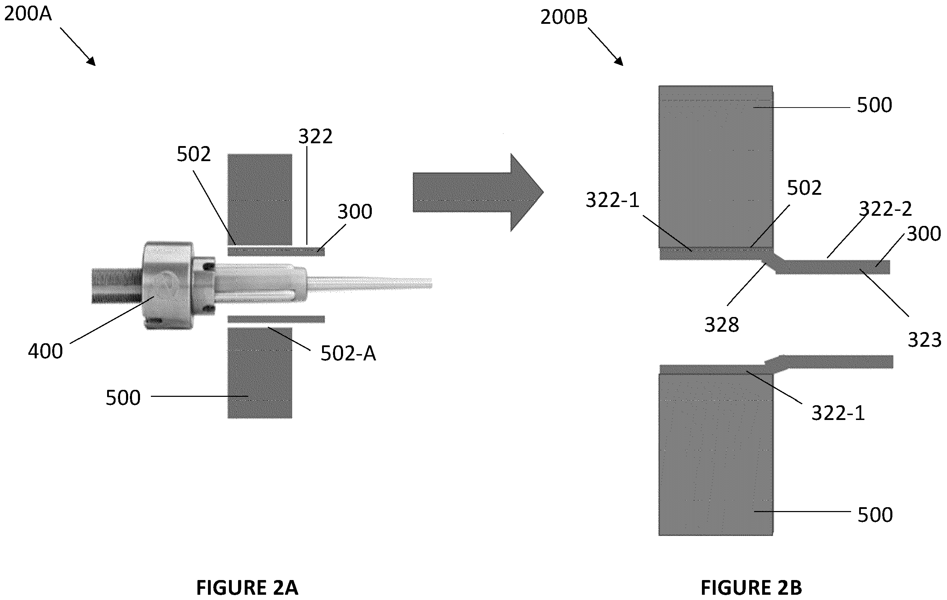

Referring to Figure 1, Figures 2A-2B, Figures 3A-3B, and Figures 4A-4D, the method 100 represents steps for protecting the tube of the shell and tube exchanger by fixing the non-ferrous tubes 300 in a tube sheet 500 of the heat exchanger. Figures 2A and 2B illustrate a schematic view depicting a rolling operation performed in one of the non-ferrous tubes 300. More specifically, Figure 2A illustrates a schematic view 200A depicting insertion of the rolling tool 400 into the non-ferrous tube 300 to initiate the rolling operation, and Figure 2B illustrates a schematic view 200B depicting the non-ferrous tube 300 after completion of the rolling operation.

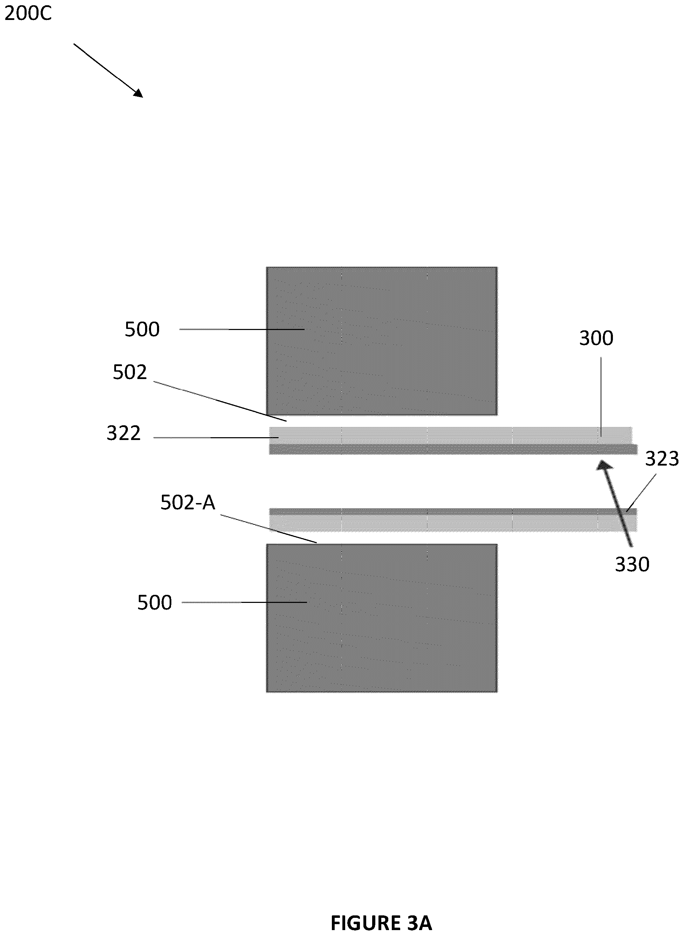

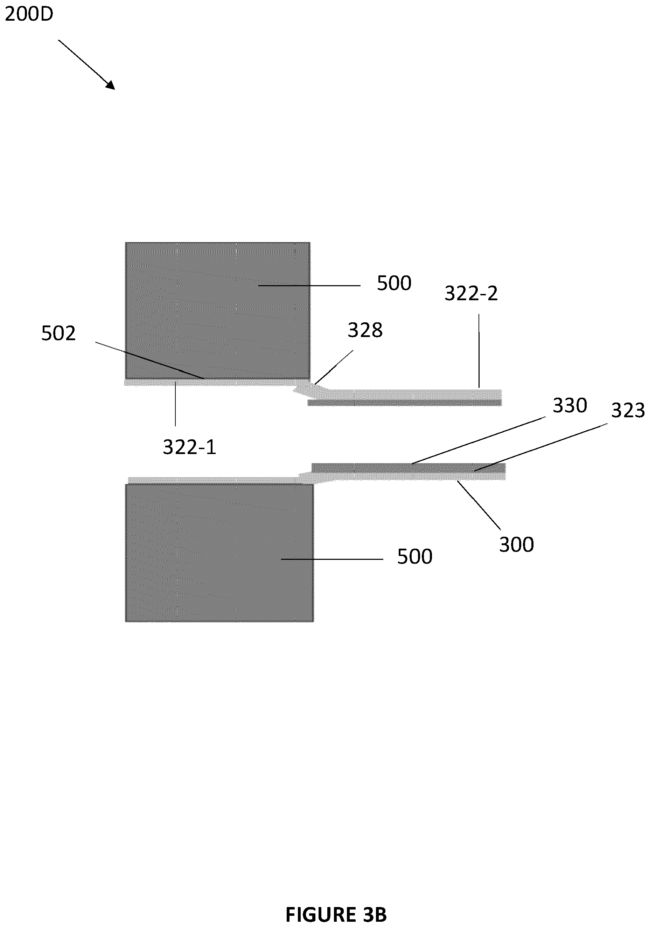

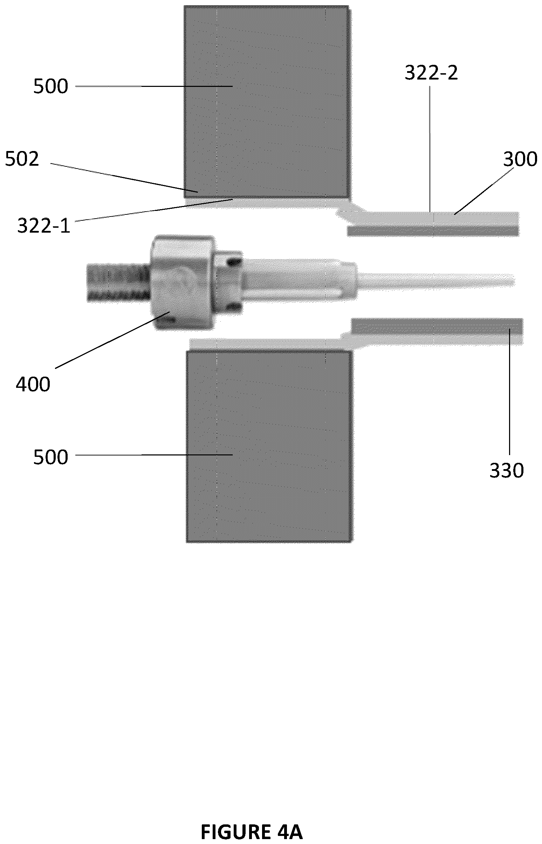

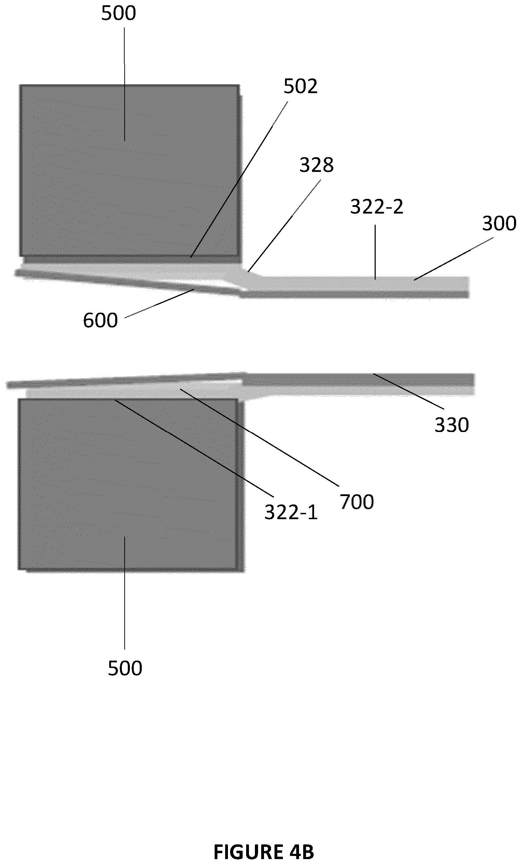

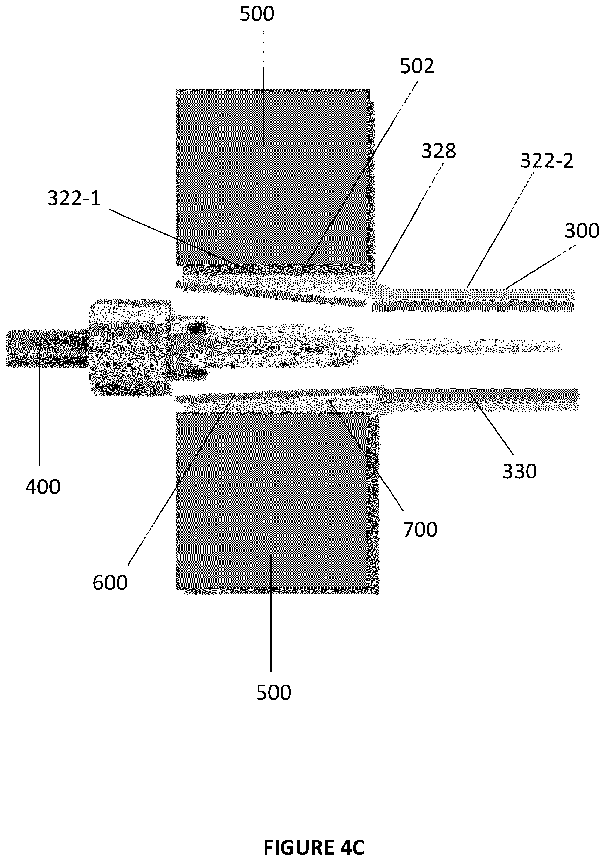

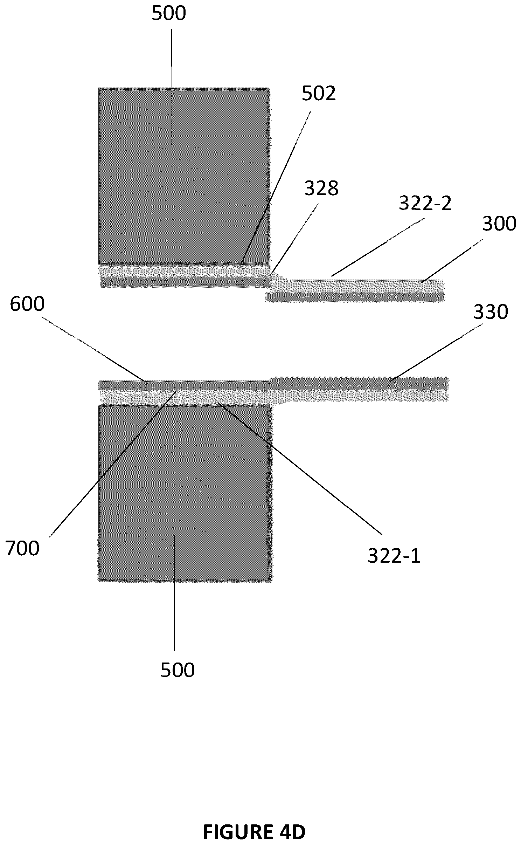

Figure 3A illustrates a schematic view 200C depicting one of the non-ferrous tubes 300 before performing the rolling operation in the non-ferrous tube 300, and Figure 3B illustrates a schematic view 200D depicting at least one portion 322-1, which is damaged on an inner surface 323 of the non-ferrous tube 300 after the rolling operation is performed on the non-ferrous tube 300. Figures 4A-4D are line diagrams showing the fixing of the non-ferrous tube 300 into the hole 502 of the tube sheet 500. More specifically, Figure 4A illustrates the rolling operation of the non-ferrous tube 300 with the rolling tool 400, and Figure 4B illustrates an application of an adhesive 700 and the insertion of a sleeve 600 into the non-ferrous tube 300. More specifically, Figure 4C illustrates an application of pressure onto the adhesive 700 with the rolling tool 400, and Figure 4D illustrates the sleeve 600 adhered to the at least one portion 322-1 of the non-ferrous tube 300.

Turning back to Figure 1, at step 101, the method 100 may include inserting the at least one portion 322-1 of the non-ferrous tube 300 into the hole 502 of the tube sheet 500 of the heat exchanger, as also depicted in Figures 2A and 2B. In an embodiment, the at least one portion 322-1 of the non-ferrous tube 300 may include, but is not limited to, an end of the non-ferrous tube 300. The tube sheet 500 may be a flat piece of a sheet (not shown) and includes the holes 502 in a predefined arrangement, such that the non-ferrous tube 300 can be held in a predefined arrangement inside the heat exchanger. Next, at step 103 (as shown in Figure 1), the method 100 may include fixing the non-ferrous tube 300 into the holes 502 of the tube sheet 500 by rolling the at least one portion 322-1 of the non-ferrous tube 300 to radially expand the at least one portion 322-1, as also depicted in Figures 2A and 2B. The at least one portion 322-1 expands and forms a seal with the hole 502 of the tube sheet 500. The rolling tool 400 may be a multiple roller head that is inserted into the non-ferrous tube 300. In one embodiment, the rolling tool 400 may be attached to a motor (not shown) for receiving the rotational force after being inserted into the non-ferrous tube 300.

Referring again to Figures 2A and 2B, the rolling tool 400 may rotate inside the non-ferrous tube 300, thereby expanding the inner surface 323 of the non-ferrous tube 300 by exerting an outward force onto the inner surface 323. The outward force of the rolling tool 400 may radially expand a wall 322 of the non-ferrous tube 300 towards a surface 502-A defining the hole 502 of the tube sheet 500 to seal the wall 322 with the surface 502-A of the tube sheet 500. In other words, the rolling tool 400 may exert a force onto the wall 322 of the non-ferrous tube 300, thereby plastically deforming the non-ferrous tube 300 to form an interference fit with the surface 502-A of the tube sheet 500 as shown in Figure 3A. In one embodiment, a diameter of an expanded portion (the at least one portion 322-1) of the non-ferrous tube 300 is greater than a diameter of the hole 502 of the tube sheet 500, as depicted in Figures 2A and 2B, Figure 3A, and Figure 3B.

In one embodiment, the non-ferrous tube 300 may be made up of Aluminum. In such an embodiment, the non-ferrous tube 300 may initially include a coating 330 on the inner surface 323 of the non-ferrous tube 300. In one example, the coating 330 may be made up of poluAl XT (Aluminum pigmented polyurethane) and is adapted to protect the non-ferrous tube 300 from corrosion due to exposure to moisture and other foreign substances. In another example, the coating 330 may be formed of any other material known in the art which is capable of protecting the non-ferrous tube 300 from corrosion.

The coating 330 may be provided on the inner surface 323 of the non-ferrous tube 300. The application of pressure by the rolling tool 400 on the inner surface 323 of the non-ferrous tube 300 may damage the coating 330 on the at least one portion 322-1 of the non-ferrous tube 300. The damaged portion may be the rolled portion, i.e., the at least one portion 322-1 of the non-ferrous tube 300, inserted within the hole 502 of the tube sheet 500. The at least one portion 322-1 being damaged, exposes the inner surface 323 of the non-ferrous tube 300 to moisture and foreign substances. Such exposure to moisture and foreign substances may cause corrosion of the non-ferrous tube 300, thereby shortening the life of the non-ferrous tube 300, and the heat exchanger as a whole.

In another embodiment, the coating 330 may not be provided on the inner surface 323 of the non-ferrous tube 300. In such an embodiment, application of pressure by the rolling tool 400 on the inner surface 323 of the non-ferrous tube 300 may damage the at least one portion 322-1 of the non-ferrous tube 300. The damage to the inner surface 323 of the non-ferrous tube 300 makes the non-ferrous tube 300 less durable and weak from the at least one portion 322-1 because of the rolling operation, thereby shortening the life of the non-ferrous tube 300, and the heat exchanger as a whole. In an embodiment, the at least one portion 322-1 of the non-ferrous tube 300 may be protected and strengthened by the sleeve 600, as depicted in Figure 4A-4D.

In one embodiment, the sleeve 600 may be provided on the at least one portion 322-1 of the non-ferrous tube 300 with the damaged coating 330. In another embodiment, the non-ferrous tube 300 may not have any coating initially, and the sleeve 600 may be provided on the at least one portion 322-1 of the non-ferrous tube 300 wherein the non-ferrous tube 300 may have been damaged from the at least one portion 322-1 due to the rolling operation. Now referring to Figure 1 and Figures 4A, 4B, 4C, and 4D, the sleeve 600 is inserted into the non-ferrous tube 300 to coaxially align the sleeve 600 with the inner surface 323 of the non-ferrous tube 300. The sleeve 600 helps in strengthening the at least one portion 322-1 of the non-ferrous tube 300. In case the non-ferrous tube 300 includes the coating 330 on the inner surface 323, the sleeve 600 may be affixed on the inner surface 323 of the non-ferrous tube 300, having the coating 330. The sleeve 600 may be coaxially aligned with the coating 330 of the non-ferrous tube 300. The sleeve 600 may then be affixed onto the coating 330 or the damaged portion of the coating 330. The damaged portion is defined as a portion of the coating 330 which is rolled to radially expand the at least one portion 322-1 of the non-ferrous tube 300.

In one embodiment, the sleeve 600 may include a watertight material. The watertight material of the sleeve 600 prevents ingress of water and dust through the at least one portion 322-1 of the non-ferrous tube 300, thereby providing strength to the non-ferrous tube 300, and protecting the non-ferrous tube 300 from corrosion. Therefore, the watertight material helps in enhancing the overall service life of the non-ferrous tube 300. In one embodiment, the watertight material may be a flexible elastomer, without departing from the scope of the disclosure. The flexible elastomer helps in making the sleeve 600 flexible, which enables the sleeve 600 to stretch and take a form of the at least one portion 322-1 of the non-ferrous tube 300.

In another embodiment, the sleeve 600 may be formed of, but is not limited to, a polymer, a chemical, a metal, a paint, a primer, an epoxy, or formed of any material as per requirement and application. Referring to Figures 4A-4D, in an embodiment, the sleeve 600 may be coaxially aligned with a joint 328 of the non-ferrous tube 300. The joint 328 may be defined between the at least one portion 322-1 of the non-ferrous tube 300 and an unrolled portion 322-2 of the non-ferrous tube 300. Referring again to Figure 1, at step 105, the method 100 may include affixing the sleeve 600 onto the inner surface 323 corresponding to the at least one portion 322-1 of the non-ferrous tube 300. In one embodiment, the sleeve 600 may be mechanically affixed onto the inner surface 323 of the non-ferrous tube 300. In one example, the sleeve 600 may be mechanically affixed onto the inner surface 323 by using mechanical expansion techniques. In another embodiment, the sleeve 600 may be chemically affixed onto the inner surface 323 of the non-ferrous tube 300.

Chemically affixing the sleeve 600 onto the inner surface 323 of the non-ferrous tube 300 has been depicted in Figures 4A, 4B, 4C and 4D. In one embodiment, chemically affixing the sleeve 600 may include applying the adhesive 700 onto the inner surface 323 of the non-ferrous tube 300. In one embodiment, the adhesive 700 may be a pressure-sensitive adhesive. The pressure-sensitive adhesive may contain compounds that form bonds when pressure is applied to bond the pressure-sensitive adhesive to a surface. In one embodiment, the adhesive 700 may be applied on the at least one portion 322-1 with an applicator (not shown). In one example, the applicator may include, but is not limited to, a brush, a spray, and a squeezable equipment, without departing from the scope of the disclosure. The sleeve 600 may be inserted into the non-ferrous tube 300 to coaxially align the sleeve 600 with the inner surface 323 of the non-ferrous tube 300. The sleeve 600 may be affixed onto the at least one portion 322-1 of the non-ferrous tube 300 using the adhesive 700. If the adhesive 700 is the pressure sensitive adhesive, the adhesive 700 may be activated by applying pressure onto the sleeve 600 to adhere the sleeve 600 onto the inner surface 323 of the at least one portion 322-1. In one embodiment, pressure may be applied using the rolling tool 400. In one embodiment, the adhesive 700 may be activated by applying pressure on at least one portion of the sleeve 600 with the rolling tool 400. In one embodiment, the adhesive 700 may be embodied as an adhesive that can be activated without the application of pressure. If such adhesive is implemented, the sleeve 600 may directly be affixed to the inner surface 323 of the non-ferrous tube 300 without applying any pressure.

The method 100 disclosed herein provides affixing a water-tight sleeve, such as the sleeve 600, to the internal surface 323 of the non-ferrous tube 300. The sleeve 600 may ensure that the at least one portion 322-1 from where the internal surface 323 of the non-ferrous tube 300 may or may not be damaged, is no longer a limiting factor in the overall lifespan of the heat exchanger. Further, the watertight material of the sleeve 600 prevents ingress of water and dust through the at least one portion 322-1 of the non-ferrous tube 300, thereby protecting the non-ferrous tube 300 from corrosion. Therefore, the watertight material may help in enhancing life of the non-ferrous tube 300. Furthermore, the flexible elastomer of the watertight material may provide flexibility to the sleeve 600. Therefore, the sleeve 600 is capable of stretching and taking the form of the at least one portion 322-1 of the non-ferrous tube 300.

As mentioned earlier, the tube may be implemented in the heat exchanger. The heat exchanger may include a plurality of tubes, such as the non-ferrous tube 300. Each of the plurality of tubes 300 may be protected by the method 100, as explained in the previous paragraphs.

In one embodiment, the plurality of tubes 300 of the heat exchanger may be protected by the method 100, and the sleeve may have a thickness of 0.002 mm to 6 mm.

Implementation of the sleeve 600 on the inner surface 323 enables the non-ferrous tube 300 to withstand a corrosive environment. The method 100 helps to seal and protect the at least one portion 322-1, which is damaged from corrosion and provides strength, thereby increasing the overall service life of the non-ferrous tube 300. Further, conventional methods focus on corrosion mitigation applications that are applied prior to the installation of the non-ferrous tube 300. However, the disclosure provides the method 100 for protecting the non-ferrous tube 300 after being installed in the heat exchanger. Furthermore, the non-ferrous tube 300 is less expensive as compared to the materials used for manufacturing tubes in conventional heat exchanger, thereby reducing the overall manufacturing cost of the heat exchanger.

While specific language has been used to describe the subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A method for protecting a tube of a heat exchanger, the method comprising:
inserting at least one portion of a non-ferrous tube into a hole of a tube sheet of the heat exchanger;
rolling the at least one portion of the non-ferrous tube to radially expand the at least one portion, wherein the at least one portion expands and forms a seal with the hole; and
affixing a sleeve onto an inner surface corresponding to the at least one portion of the non-ferrous tube.

2. The method according to claim 1, wherein the sleeve is mechanically affixed onto the inner surface of the non-ferrous tube.

3. The method according to claim 1, wherein the sleeve is chemically affixed onto the inner surface of the non-ferrous tube.

4. The method according to claim 3, wherein chemically affixing the sleeve comprises:
applying an adhesive onto the inner surface of the non-ferrous tube;
inserting the sleeve into the non-ferrous tube to coaxially align the sleeve with the inner surface of the non-ferrous tube; and
affixing the sleeve onto the inner surface of the non-ferrous tube using the adhesive.

5. The method according to claim 4, wherein affixing the sleeve on the inner surface having a coating, comprises:
coaxially aligning the sleeve with the coating of the non-ferrous tube; and
affixing the sleeve onto the coating or a damaged portion of the coating, wherein the damaged portion is defined as a portion of the coating which is rolled to radially expand the at least one portion of the non-ferrous tube.

6. The method according to claim 4 or 5, wherein the adhesive is a pressure sensitive adhesive.

7. The method according to any of claims 3 to 6, wherein the adhesive is activated by applying pressure on at least one portion of the sleeve with a rolling tool.

8. The method according to any preceding claim, wherein the sleeve is coaxially aligned with a joint of the non-ferrous tube, the joint is defined between a rolled portion of the non-ferrous tube and an unrolled portion of the non-ferrous tube.

9. The method according to any preceding claim, wherein the non-ferrous tube is made up of aluminum.

10. The method according to any preceding claim, wherein the sleeve is formed of a watertight material.

11. The method according to claim 10, wherein the watertight material is a flexible elastomer.

12. A heat exchanger comprising a plurality of tubes for exchanging heat, wherein the plurality of tubes is protected by the method according to any of the claims 1 to 11.

13. A heat exchanger according to claim 12, wherein the sleeve comprises a thickness of 0.002 mm to 6 mm.
